# EUROPEAN PATENT APPLICATION

(11) **EP 2 765 077 A1**
(43) Date of publication of application: **13.08.2014**
(21) Application number: 12837735.5
(22) Date of filing: 08.10.2012
(51) Int. Cl.: B63H 5/07, B63B 1/38, B63H 1/28

(54) **EXCITATION FORCE REDUCING TYPE SHIP**

(30) Priority: 07.10.2011 KR 20110102691; 10.01.2012 KR 20120002743; 10.01.2012 KR 20120002744
(71) Applicant: Samsung Heavy Ind. Co., Ltd., Seoul 137-955 (KR)
(72) Inventor: KIM, Jin Hak, Daejeon 305-728 (KR); SEO, Jong Soo, Daejeon 305-727 (KR); HWANGBO, Seung Myun, Daejeon 305-748 (KR); PARK, Hyung Gil, Daejeon 305-750 (KR); LEE, Jeung Hoon, Daejeon 305-745 (KR)
(74) Representative: Grünecker, Kinkeldey, Stockmair & Schwanhäusser
(86) International application number: PCT/KR2012/008136
(87) International publication number: WO 2013/051915

(57) **Abstract**

Disclosed is an excitation force reducing type ship. An excitation force reducing type ship according to one embodiment of the present invention comprises: a hull having a rear end with a propeller; and an excitation force reducing module which forms an air layer for generating reflected waves on a surface of the hull neighboring the propeller during an operation of the propeller so as to reduce the excitation force in the direction of the hull, wherein the excitation force reducing module can be arranged eccentrically with respect to a center line penetrating through the center of the axis of rotation of the propeller in a vertical direction of the hull.

## Description

### TECHNICAL FIELD

The present invention relates to an excitation force reducing type ship, and more particularly, to an excitation force reducing type ship having an improved structure to reduce an excitation force.

### BACKGROUND ART

As a propeller provided in the stern of a ship rotates under water, water flows along a surface of a wing of the propeller and generates a difference in the water pressure between the forward and rear surfaces of a wing of the propeller. The difference in the water pressure generates a thrust force which makes a ship move at sea.

When the propeller is operated for a movement of a ship, that is, the propeller rotates under water, pressure fluctuation occurs under water by the propeller as a rotating body. The pressure fluctuation increases excitation force to a hull of a ship so that vibration including noise is generated in the hull.

In particular, when cavitation is generated under water by the propeller, the excitation force is further increased so that the ship may severely vibrate.

When a low pressure spot is generated under water, gas included in water escapes from the water and gathers in the low pressure spot so that air bubbles are generated. Accordingly, when the generated air bubbles arrive at a high pressure spot, the air bubbles are quickly broken so that strong pressure fluctuation is generated under water.

To solve the above problem that an excitation force is increased due to pressure fluctuation, a variety of methods have been tried, for example, the shape or size of a wing of the propeller is differently designed, the shape of the stern of a ship is improved, a separate reinforcement member to cut off noise and vibration is added, a guide apparatus to guide a flow of water coming from the stem of a ship is attached, or the size of a propeller is reduced. However, such methods are not substantially effective on reducing an excitation force.

On the other hand, the problem of vibration including noise that is transferred to a hull as the excitation force is increased due to the pressure fluctuation by the propeller needs to be solved as soon as possible in case of a ship such as a cruise ship for tour or a warship requiring a quite movement. Accordingly, research and development about the above problems are demanded.

### DETAILED DESCRIPTION OF THE INVENTION

### TECHNICAL PROBLEM

The present invention provides an excitation force reducing type ship which may prevent generation of vibration in a hull as an excitation force is increased due to pressure fluctuation occurring during the operation of a propeller.

### ADVANTAGEOUS EFFECTS

According to the present invention, the generation of vibration in a hull as an excitation force is increased due to pressure fluctuation occurring during the operation of a propeller may be prevented.

### DESCRIPTION OF THE DRAWINGS

FIG. 1 is a structural view of a propeller area of an excitation force reducing type ship according to an embodiment of the present invention.
FIG. 2 is a schematic rear structural view of FIG. 1.
FIG. 3 illustrates a test example of an excitation force reducing module.
FIGS. 4A and 4B are graphs showing results of the test example of FIG. 3.
FIG. 5 is an enlarged structural view of a region A of FIG. 1.
FIG. 6 is an exploded view of FIG. 5.
FIG. 7 is a perspective view of FIG. 6.
FIG. 8 is a rear perspective view of an excitation force reducing module.
FIG. 9 is a control block diagram of the excitation force reducing type ship of FIG. 1.
FIG. 10A is a schematic rear structural view of an excitation force reducing type ship according to another embodiment of the present invention, and FIG. 10B is a modified example.
FIG. 11 is a cross-sectional structural view of an excitation force reducing module area in an excitation force reducing type ship according to another embodiment of the present invention.
FIG. 12 is a cross-sectional structural view of an excitation force reducing module area in an excitation force reducing type ship according to another embodiment of the present invention.
FIG. 13 is a cross-sectional structural view of an excitation force reducing module area in an excitation force reducing type ship according to another embodiment of the present invention.
FIGS. 14 and 15 are views illustrating an operation of a line opening/shutting module applied to an excitation force reducing module of an excitation force reducing type ship according to another embodiment of the present invention.
FIGS. 16 and 17 are views illustrating an operation of a line opening/shutting module applied to an excitation force reducing module of an excitation force reducing type ship according to another embodiment of the present invention.
FIGS. 18 and 19 are views illustrating an operation of a line opening/shutting module applied to an excitation force reducing module of an excitation force reducing type ship according to another embodiment of the present invention.

### BEST MODE

According to an aspect of the present invention, an excitation force reducing type ship includes a hull having a propeller provided at the stern, an excitation force reducing module for reducing an excitation force toward the hull by forming an air layer that generates reflected waves, on a surface of the hull neighboring the propeller during an operation of the propeller, in which the excitation force reducing module is arranged to be deviated to one side with respect to a center line that passes through a rotational axis of the propeller in a vertical direction of the hull.

The air layer that is formed by the excitation force reducing module may be formed in a partial area of the surface of the hull neighboring the propeller.

The excitation force reducing module may be arranged to be deviated to one side in a direction in which the propeller rotates, with respect to the center line.

The excitation force reducing module may form an air layer on the surface of the hull by ejecting air in a direction from the stem to the stem of the hull.

The excitation force reducing module may include a protruding portion that is coupled to a wall surface of the hull and protrudes from an outer surface of the hull, and the excitation force reducing module forms an air layer on the surface of the hull by generating air bubbles on the outer surface of the hull through an air bubble ejection hole that is formed in the protruding portion.

The excitation force reducing type ship may further include a porous cap that is coupled to an area of the air bubble ejection hole.

The excitation force reducing type ship may further include a bottom plug that is coupled to a wall surface of the hull and to which the excitation force reducing module is detachably coupled, and a compressed air supply portion for supplying compressed air to the excitation force reducing module.

The compressed air supply portion may include a compressor provided at one side of the hull, a compressed air supply line for directly connecting the compressor and the excitation force reducing module, and at least one valve provided on the compressed air supply line and regulating a flow of compressed air flowing along the compressed air supply line.

The excitation force reducing module may include a module body having a compressed air flow line that is formed in the module body, through which compressed air supplied by the compressed air supply portion flows, the module body being coupled to a penetration portion of the bottom plug by being inserted therein and having a protruding portion formed at one side of the module body, and a body flange formed at the other side of the module body and arranged on a support seat of the bottom plug.

The protruding portion may include an inclined wall portion connected to one side of the module body to be inclined; and a vertical wall portion arranged perpendicularly from an end portion of the inclined wall portion toward a surface of the module body.

The compressed air flow line may include a linear section portion extending along a lengthwise direction of the module body, and a cross section portion arranged inside the protruding portion to cross the linear section portion and having an air bubble ejection hole that is formed at an end portion of the cross section portion.

An arc type guide portion for guiding the compressed air may be further provided between the linear section portion and the cross section portion.

The linear section portion and the cross section portion may be provided independently in multiple numbers.

The excitation force reducing type ship may further include a pressure fluctuation detection unit provided on the hull and detect pressure fluctuation occurring during an operation of the propeller, and a controller for controlling generation of air bubbles through the excitation force reducing module based on information output from the pressure fluctuation detection unit.

The excitation force reducing type ship may further include a line opening/shutting module that is provided on the compressed air flow line of the excitation force reducing module and selectively opens/shuts an opening of the compressed air flow line.

The line opening/shutting module may be a non-powered line opening/shutting module that opens the compressed air flow line when the compressed air is supplied through the compressed air flow line and shuts the compressed air flow line when the supply of the compressed air is discontinued.

The non-powered line opening/shutting module may include a ball member arranged in the compressed air flow line and opening/shutting the compressed air flow line, and a first elastic member coupled to the ball member and compressed to allow the ball member to open the compressed air flow line when the compressed air is supplied and expands to allow the ball member to shut the compressed air flow line when the supply of the compressed air is discontinued.

The non-powered line opening/shutting module may further include a ball chamber provided on the compressed air flow line and forming a space where the ball member is accommodated, the space having a portion having a width that is relatively smaller than that of a downstream portion in a direction in which the compressed air flows, and an elastic member support portion provided in the ball chamber and supporting the first elastic member.

The non-powered line opening/shutting module may include a line opening/shutting plate rotatably arranged in the compressed air flow line and selectively opening/shutting the compressed air flow line, a second elastic member coupled to the line opening/shutting plate and elastically biased in a direction in which the line opening/shutting plate is returned to the original position, and a stopper provided on a wall body of the compressed air flow line and restricting pivoting of the line opening/shutting plate.

### MODE OF THE INVENTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein.

Accordingly, the embodiments are merely described below, by referring to the figures, to explain aspects of the present description.

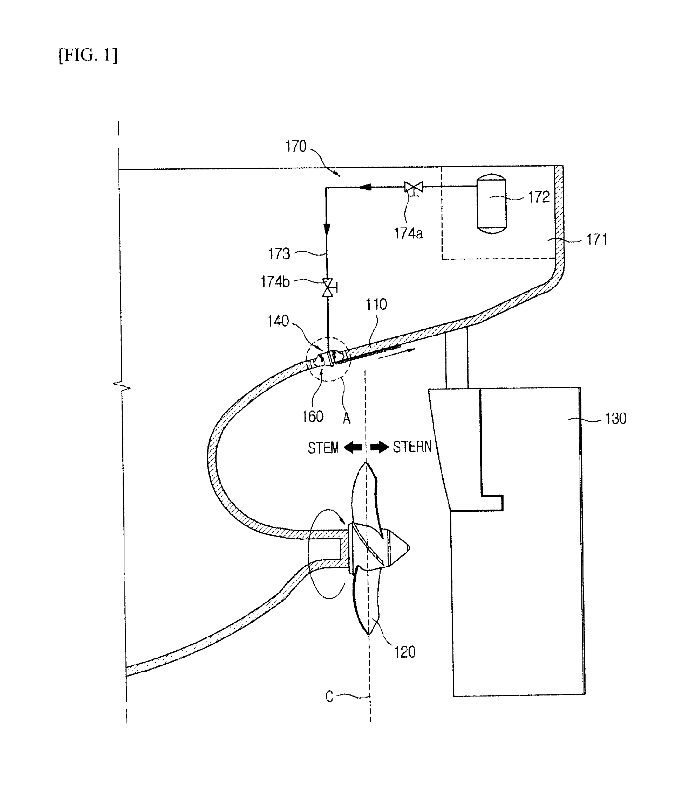

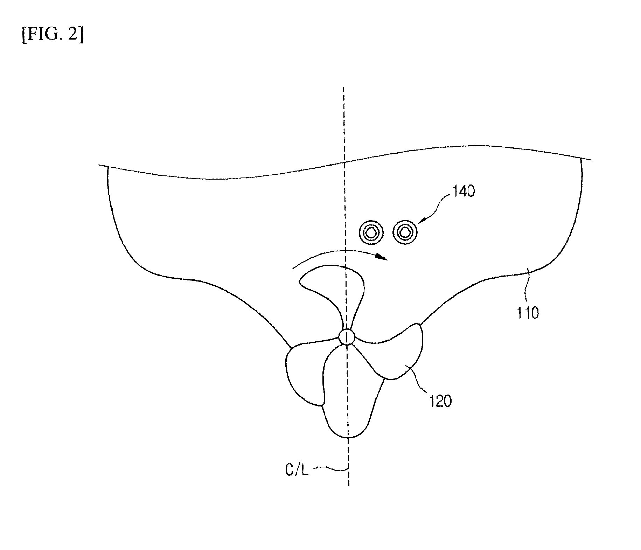

FIG. 1 is a structural view of a propeller area of an excitation force reducing type ship according to an embodiment of the present invention. FIG. 2 is a schematic rear structural view of FIG. 1.

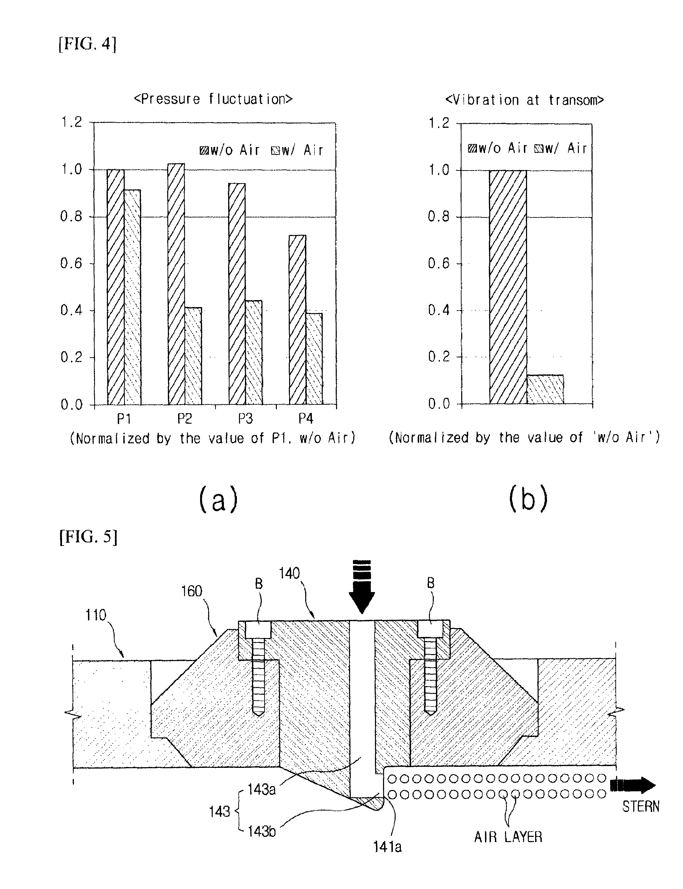

Referring to FIGS. 1 and 2, a ship according to the present embodiment is an excitation force reducing type ship and may include a hull 110 with a propeller 120 provided in the stern of the ship and an excitation force reducing module 140 for reducing an excitation force toward the hull 110 by forming an air layer (refer to FIGS. 1 and 5) for generating reflected waves on a surface of the hull 110 neighboring the propeller 120 during an operation of the propeller 120.

The ship in the present embodiment may include a merchant ship, a warship, a fishing boat, a carrier, a drill ship, a cruise ship, and a special working ship, as well as a floating offshore structure.

A rudder 130 for controlling a proceeding direction of a ship is provided around the propeller 120. The rudder 130 may be a general rudder or a bulb rudder.

When the propeller 120 is operated as described above, that is, the propeller 120 rotates under water, pressure fluctuation occurs under water due to the propeller 120 as a rotating body. The pressure fluctuation causes generation of vibration including noise to the hull 110 by increasing an excitation force to the hull 110

The vibration that is transferred to the hull 110 may be a big problem when the ship is for example, a cruise ship for tour or a warship requiring a quiet movement. To prevent the above problem, that is, to prevent generation of vibration in the hull 110 due to an increased excitation force by the pressure fluctuation occurring under water during the operation of the propeller 120, the present embodiment proposes an excitation force reducing module 140.

Referring to FIG. 2, the excitation force reducing module 140 may be arranged to be deviated to one side with respect to a center line C/L that passes through a rotational axis of the propeller. 120 in a vertical direction of the hull 110.

For example, in the present embodiment, the excitation force reducing module 140 may be arranged to be deviated in a direction in which the propeller 120 rotates with respect to the center line C/L of the hull 110. The excitation force reducing module 140 ejects air in a direction from the stem to the stem of the hull 110 to form an air layer that generates reflected waves on a surface of the hull (refer to FIGS. 1 and 5). The present invention is not limited thereto and the excitation force reducing module 140 may be arranged to be deviated in a direction opposite to the direction in which the propeller 120 rotates with respect to the center line C/L of the hull 110.

Regardless of the position of the excitation force reducing module 140, it is sufficient that the excitation force reducing module 140 forms an air layer in a partial area of the surface of the hull 110 neighboring the propeller 120. In other words, the air layer may be formed only in a partial area, not covering the entire area of the surface of the hull 110 neighboring the propeller 120. By doing so, it is advantageous that an excitation force toward the hull 110 may be reduced by the operation of reflected waves.

FIG. 2 is a schematic rear structural view of FIG. 1. Although FIG. 2 illustrates that two excitation force reducing modules 140 are provided in the present embodiment, the number of the excitation force reducing modules 140 may be one or three or more.

As the excitation force reducing module 140 that is provided on the hull 110 forms an air layer of a particular width (refer to FIGS. 1 and 5) on the surface of the hull 110 in a direction toward the stern as illustrated in FIG. 2, generation of vibration in the hull 110 according to an increase of the excitation force due to the pressure fluctuation occurring during the operation of the propeller 120 may be prevented.

In detail, spherical pressure waves that are generated by cavitation during the operation of the propeller 120 may be propagated in all directions. When the air layer is formed on the surface of the hull 110 neighboring the propeller 120 as illustrated in FIGS. 1 and 5 regardless of the port and the starboard of a vessel as in the present embodiment, part of the spherical pressure waves incident on the air layer is reflected outwardly from the air layer with a phase close to almost 180° compared to the incident wave. The reflected waves may offset/reduce the incident waves that are spherical pressure waves being incident on the air layer. As such, the pressure fluctuation transferred to the hull 110 from the outside of the air layer may be reduced. When the pressure fluctuation transferred to the hull 110 from the outside of the air layer decreases, an excitation force deceases and thus noise or vibration generated in the hull 110 is naturally reduced.

To approve the above contents, application to ship and tests have been performed and results thereof are shown in graphs.

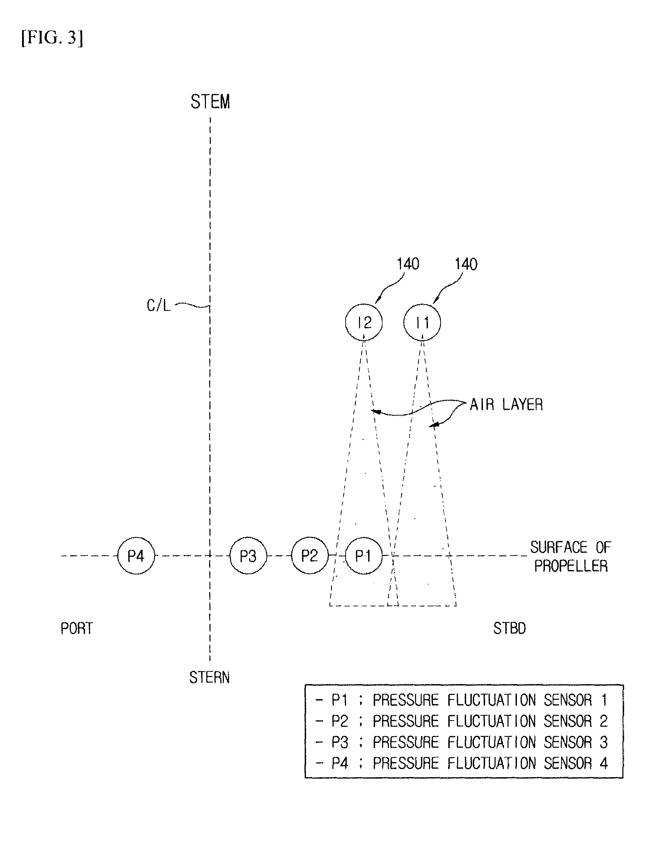

FIG. 3 illustrates a test example of the excitation force reducing module 140. FIGS. 4A and 4B are graphs showing results of the test example of FIG. 3.

In an area STBD of 11 and 12 of FIG. 3, the excitation force reducing modules 140 eject air in a direction from the stem to the stem forming air layers of particular widths on the surface of the hull 110. Pressure fluctuation sensors 1-4 are arranged at positions P1 to P4 to measure pressure fluctuation. When the air layer is formed, the pressure fluctuation is reduced by an average of about 50% as illustrated in FIG. 4A and vibration in a transom area is reduced by 80% or more as illustrated in FIG. 4B. In particular, the pressure fluctuation may be reduced by an average 50% or more at the positions P2, P3, and P4 that are located outside the air layer.

According to the above results, when the air layer is formed on the surface of the hull 110 neighboring the propeller 120 through the excitation force reducing module 140 according to the present embodiment as illustrated in FIGS. 1 and 5, the pressure fluctuation transferred to the hull 110 from the outside of the air layer decreases so that the excitation force may be reduced.

The detailed structure of the excitation force reducing module 140 as above will be described below with reference to FIGS. 5 to 8.

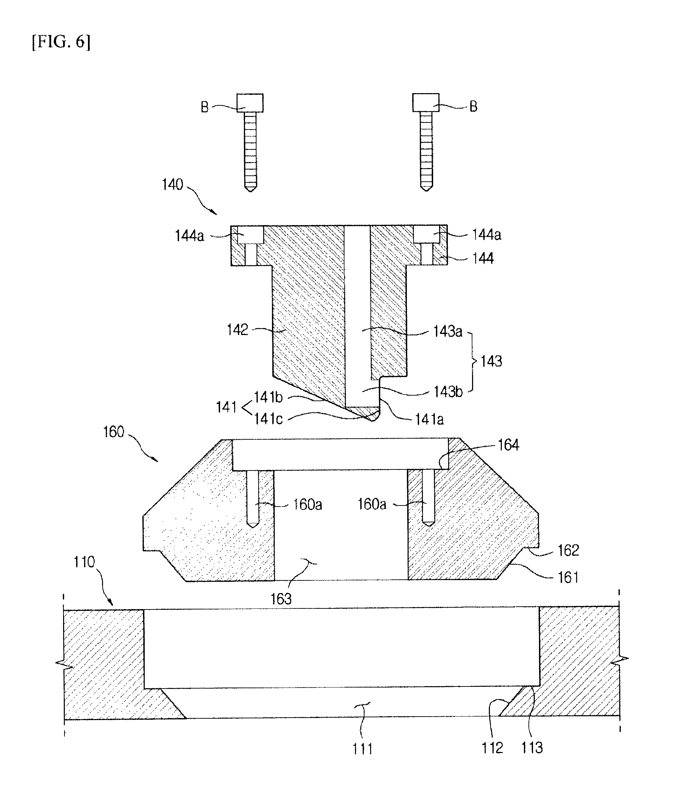

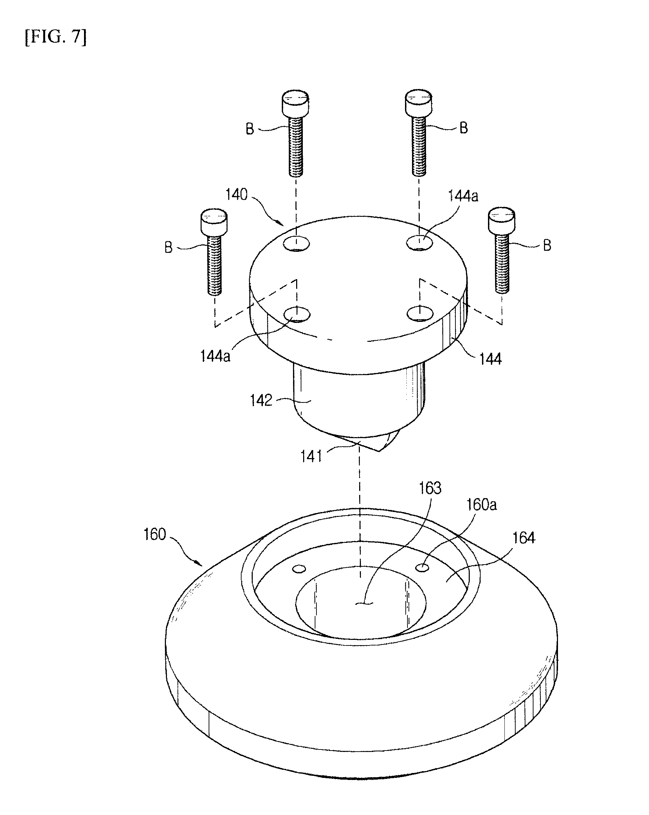

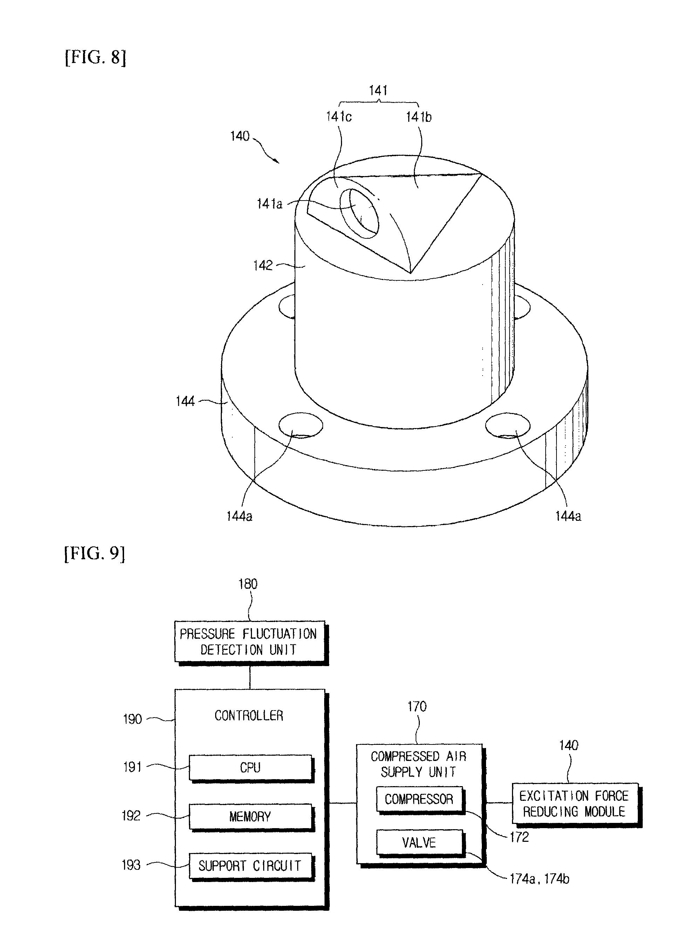

FIG. 5 is an enlarged structural view of a region A of FIG. 1. FIG. 6 is an exploded view of FIG. 5. FIG. 7 is a perspective view of FIG. 6. FIG. 8 is a rear perspective view of an excitation force reducing module.

Referring to FIGS. 5 to 8, the excitation force reducing module 140 that is applied to a excitation force reducing type ship according to the present embodiment includes a protruding portion 141 coupled to a wall surface of the hull 110 neighboring the propeller 120 and protruding from an outer surface of the hull 110. The excitation force reducing module 140 generates air bubbles to the outer surface of the hull 110 through an air bubble ejection hole 141a that is formed in the protruding portion 141, thereby forming an air layer having a particular width on the surface of the hull 110 as illustrated in FIGS. 1 and 5.

To assemble the excitation force reducing module 140, a bottom plug 160 is coupled to the wall surface of the hull 110. As the excitation force reducing module 140 that receives compressed air by a compressed air supply unit 170 that is provided on the hull 110 ejects the compressed air under water, an air layer is formed on the surface of the hull 110 due to the air bubbles.

The bottom plug 160 and the compressed air supply unit 170 are described prior to the description of the excitation force reducing module 140.

The bottom plug 160 is a part that is mounted on several positions on the wall surface of the hull 110. The bottom plug 160 functions as a plug for draining water coming into the hull 110. Since the bottom plug 160 is open only when necessary, the bottom plug 160 does not need to be disassembled from the hull 110 at normal times.

A plug coupling hole 111 for coupling with the bottom plug 160 is formed in the hull 110 as illustrated in FIG. 6. A first inclined surface 112 and a horizontal surface 113 are formed on an outer wall of the plug coupling hole 111. A second inclined surface 161 and a second horizontal surface 162 are formed on the bottom plug 160 respectively corresponding to the first inclined surface 112 and the horizontal surface 113.

The bottom plug 160 may be coupled to the plug coupling hole 111 by the above structure. The bottom plug 160 may be coupled to the plug coupling hole 111 in a screw method or in a press-fit method so as not to be easily disassembled.

Next, as illustrated in FIG. 1, the compressed air supply unit 170 includes a compressor 172 that is arranged in a steering gear room 171 that is provided at one side of the hull 110 and a compressed air supply line 173 that directly connects the compressor 172 and the excitation force reducing module 140.

When only one excitation force reducing module 140 is provided, the compressed air supply line 173 is provided by one. When two or more excitation force reducing modules 140 are provided, the compressed air supply line 173 is provided in the same number as that of the excitation force reducing module 140.

A plurality of valves 174a and 174b may be provided on the compressed air supply line 173. The valves 174a and 174b may be solenoid valves that are electronically controllable.

The excitation force reducing module 140 is detachably coupled to the bottom plug 160 as illustrated in FIGS. 5 to 8. When the excitation force reducing module 140 is coupled to the bottom plug 160 as above, installation and maintenance/repair of the excitation force reducing module 140 are made very easy.

However, since the right scope of the present invention is not limited thereto, the excitation force reducing module 140 does not need to be coupled to the bottom plug 160. For example, the excitation force reducing module 140 may be integrally built in the wall surface of the hull 110. Such a structure may belong to the right scope of the present invention.

The excitation force reducing module 140 may include a module body 142 that is inserted in a penetration portion 163 of the bottom plug 160 and a body flange 144 that is formed at a side opposite to the module body 142 and arranged at a support seat 164 of the bottom plug 160. A compressed air flow line 143 through which compressed air flows is formed in the excitation force reducing module 140.

The module body 142 may be provided as a cylindrical structure and is inserted in the penetration portion 163 of the bottom plug 160. The module body 142 may be manufactured of a plastic molding.

the protruding portion 141 is formed at an insertion end portion of the module body 142. When the module body 142 is inserted in the penetration portion 163 of the bottom plug 160, the protruding portion 141 has a shape of a protrusion protruding from an outer surface of the hull 110. Accordingly, air bubbles are ejected through an air bubble ejection hole 141a that is formed at an end portion of the protruding portion 141, in a particular width along the outer surface of the hull 110, forming an air layer.

The protruding portion 141 having a shape of a protrusion protruding from the outer surface of the hull 110 may include an inclined wall portion 141 b that is connected to be inclined from one side of the module body 142 and a vertical wall portion 141c that is vertically arranged from an end portion of the inclined wall portion 141b to the surface of the module body 142. As the protruding portion 141 includes the inclined wall portion 141b, that is, the inclined wall portion 141b has a structurally streamlined shape, frictional resistance to water may be reduced.

In the structure of the protruding portion 141, the air bubble ejection hole 141 a may be formed in the vertical well portion 141c. The air bubble ejection hole 141a may be a circular or oval hole. The number of the air bubble ejection hole 141a may be appropriately selected.

A plurality of first through-holes 144a and second through-grooves 144a and 160a are respectively formed in the body flange 144 and the bottom plug 160 to be connected with each other by using a bolt 13. Although it is stable that the number of each of first and second through-holes 144a and 160a is four, the numbers of the first and second through-holes 144a and 160a may be changed appropriately.

One end portion of the compressed air flow line 143 is connected to the compressed air supply line 173 of the compressed air supply unit 170. The compressed air flow line 143 includes a linear section portion 143a that extends along a lengthwise direction of the module body 142 and a cross section portion 143b that is arranged inside the protruding portion 141 crossing the linear section portion 143a and having the air bubble ejection hole 141a formed at an end portion thereof.

The linear section portion 143a and the cross section portion 143b are separately manufactured and then connected together because one-time drill processing is difficult. When the drill processing is easy, the linear section portion 143a and the cross section portion 143b may be manufactured in one body.

FIG. 9 is a control block diagram of the excitation force reducing type ship of FIG. 1.

Referring to FIG. 9, the excitation force reducing type ship according to the present embodiment may further include a pressure fluctuation detection unit 180 and a controller 1 90.

Although a method of simply turning the excitation force reducing module 140 on/off may be taken into consideration, an excitation force may be more efficiently reduced when the excitation force reducing module 140 is controlled by the controller 190.

The pressure fluctuation detection unit 180 is provided in the hull 110 and detects pressure fluctuation occurring during the operation of the propeller 120. The pressure fluctuation detection unit 180 may provided at four positions of P1 to P4 as in FIG. 3, or at one particular position or at a plurality of appropriate positions as necessary.

The controller 190 may control the generation of air bubbles through the excitation force reducing module 140 based on information output from the pressure fluctuation detection unit 180.

The controller 190 may control the generation of air bubbles or an amount of generated air bubbles through the excitation force reducing module 140 by controlling the operation of the compressor 172 and the valves 174a and 174b that are connected to the excitation force reducing module 140.

For example, when the pressure fluctuation is detected to be higher than a preset reference value, the propeller 120 may be determined to operate and thus the controller 190 turns the operation of the compressor 172 and the valves 174a and 174b on, thereby controlling the generation of air bubbles through the excitation force reducing module 140.

When there is pressure fluctuation but the pressure fluctuation is weaker than a reference value, the controller 190 may turn the operations of the compressor 172 and the valves 174a and 1 74b off or may perform controlling by lowering the speed of the compressor 172 or maintaining a degree of opening of the valves 174a and 174b.

In addition, once the propeller 120 is turned on, the controller 190 turns the operations of the compressor 172 and the valves 174a and 174b on so that air bubbles may be generated through the excitation force reducing module 140. Then, the controller 190 may control the speed of the compressor 172 or a degree of opening of the valves 174a and 174b based on the information of the pressure fluctuation detection unit 180, that is, a degree of the pressure fluctuation.

Accordingly, when general items related to the generation of air bubbles are controlled in the above various ways, not only the generation of vibration in the hull may be efficiently prevented but also loss of energy due to unnecessary operation of the compressor 172 may be reduced.

The controller 190 may include a central processing unit (CPU) 191, a memory 192, and a support circuit 193, as illustrated in FIG. 9.

The CPU 191 may be one of various computer processors that may be industrially applicable to control the operations of the compressor 172 and the valves 174a and 174b in the ship according to the present embodiment. The memory 192 is connected to the CPU 191. The memory 192 that is a computer-readable recording medium may be installed locally or remotely. The memory 192 may be at least one memory that is easily used, for example, random access memory (RAM), read-only memory (ROM), a floppy disk, a hard disk, or a certain digital storage. The support circuit 193 is coupled to the CPU 191 to support a typical operation of a processor. The support circuit 193 may include a cache, a power supply, a clock circuit, an input/output circuit, a sub-system, etc.

The excitation force reducing module 140 having the configuration described above will be briefly described below.

When the compressor 172 is operated and compressed air is supplied through the compressed air supply line 173, the compressed air flows along the linear section portion 143a and the cross section portion 143b to be ejected in a direction to the stern under water through the air bubble ejection hole 141a.

When the compressed air is strongly ejected under water, the compressed air form air bubbles and thus the air buckles form an air layer having a particular width on the surface of the hull 110 neighboring the propeller 120 as illustrated in FIGS. 1 and 5.

As described above, in the process in which spherical pressure waves generated by cavitation occurring during the operation of the propeller 120 are propagated in all directions, some of the spherical pressure waves collide against the air layer to be reflected to the outside of the air layer. The reflected waves meet incident waves that are incident toward the air layer to offset/reduce the incident waves. In the above process, pressure fluctuation transferred to the hull 110 from the outside of the air layer is reduced. Accordingly, an excitation force is reduced so that vibration transferred to the hull 110 may be reduced naturally.

According to the present embodiment, the generation of vibration in the hull 110 as the excitation force is increased due to the pressure fluctuation occurring during the operation of the propeller 120 may be prevented.

Accordingly, a problem of vibration including noise that is generated in a ship may be appropriately solved when the ship is a cruise ship for tour or a warship requiring a quite movement.

In particular, the structure of the present embodiment may increase a thrust force because the size of the propeller 120 may be greatly increased, like conventional technologies, for example, differently designing the shape or size of a wing of a propeller, improving the shape of the stern of a ship, attaching a separate reinforcement member to suppress noise and vibration, attaching a guide device to guide the flow of water coming from the stem of a ship, or reducing the side of a propeller, for efficiently solve the noise and vibration problems by reducing various general losses.

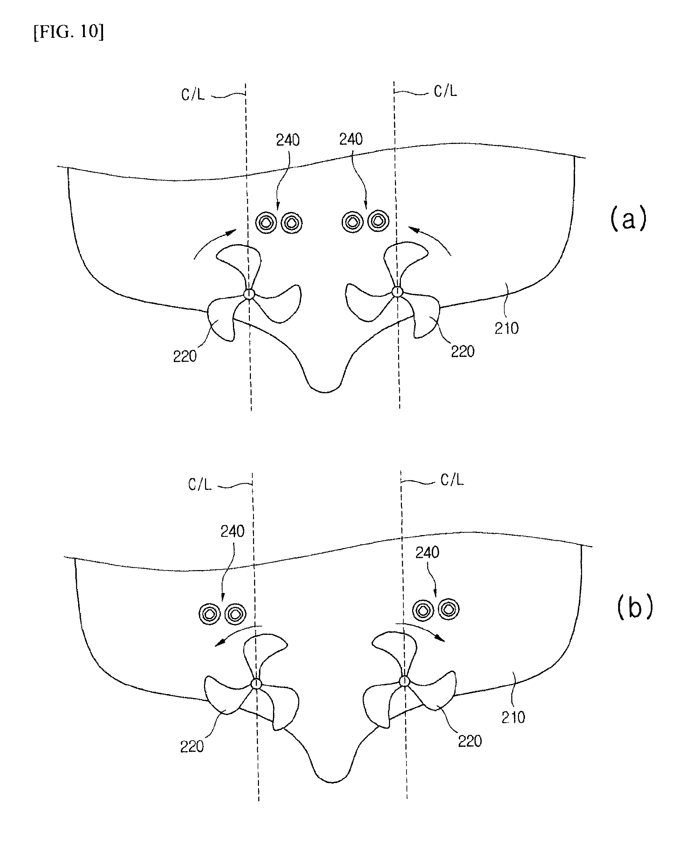

FIG. 10A is a schematic rear structural view of an excitation force reducing type ship according to another embodiment of the present invention. FIG. 10B is a modified example.

In the present embodiment, a pair of propeliers 220 are installed in a hull 210 of a ship.

In the ship, a excitation force reducing module 240 may be arranged at a position deviated to one side of the center line C/L and forms an air layer on a surface of the hull 210, thereby preventing generation of vibration in the hull 210.

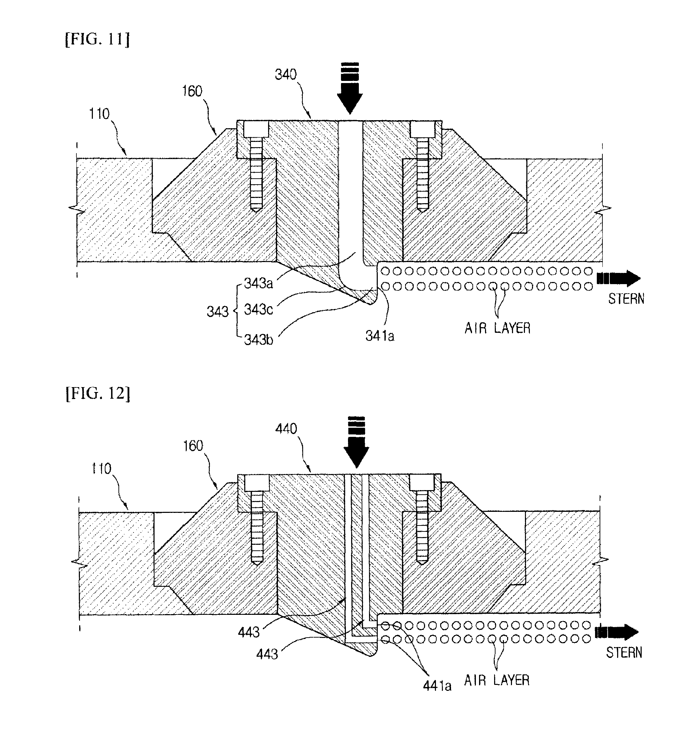

FIG. 11 is a cross-sectional structural view of an excitation force reducing module area in an excitation force reducing type ship according to another embodiment of the present invention.

In the present embodiment, a structure of a compressed air flow line 343 that is provided in an excitation force reducing module 340 is different from that of the excitation force reducing module 140 of the above-described embodiment.

In other words, in the compressed air flow line 343 of the present embodiment, an arc type guide portion 343c for guiding compressed air is further provided between a linear section portion 343a and a cross section portion 343b.

The arc type guide portion 343c guides the compressed air to be easily ejected through an air bubble ejection hole 341 a without a vortex, thereby forming an air bubble layer.

Although in the present embodiment the arc type guide portion 343c is formed by processing a portion between the linear section portion 343a and the cross section portion 343b to be an arc. Alternatively, a separate structure may be arranged in the portion between the linear section portion 343a and the cross section portion 343b so as to guide the compressed air, which belongs to the right scope of the present invention.

FIG. 12 is a cross-sectional structural view of an excitation force reducing module area in an excitation force reducing type ship according to another embodiment of the present invention.

In the present embodiment, a plurality of compressed air flow lines 443 are independently provided in an excitation force reducing module 440.

In this case, air bubble ejection hole 441a may be provided as many as the number of the compressed air flow lines 443. Accordingly, efficiency of generation of air bubbles or an amount of generation of air bubbles may be increased due to the above structure.

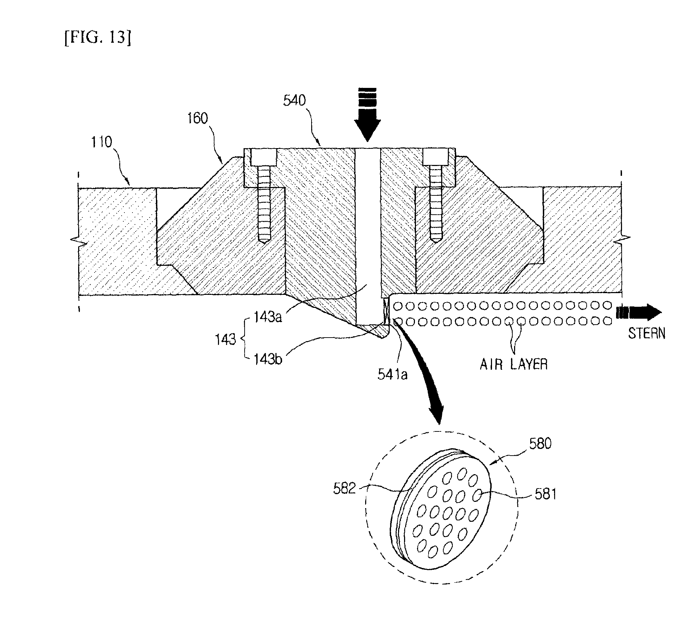

FIG. 13 is a cross-sectional structural view of an excitation force reducing module area in an excitation force reducing type ship according to another embodiment of the present invention.

The structure of the present embodiment is substantially the as that of the embodiment illustrated in FIG. 1, except that a porous cap 580 is further provided in an area of an air bubble ejection hole 541 a of an excitation force reducing module 540.

The porous cap 580 may be a disc-shaped structure in which a plurality of through-holes 581 are formed as illustrated in an enlarged circled portion of FIG. 13.

When the porous cap 580 having the through-holes 581 is applied, compressed air gets faster while passing through the through-holes 581 and simultaneously air is finely broken so that finer air bubbles may be generated in a large amount. In addition, nautical floating particles may be prevented from intruding into the excitation force reducing module 540.

A detachable coupling portion 582 may be provided on an outer circumferential surface of the porous cap 580 as a device for facilitating detachable coupling with the excitation force reducing module 540. In the present embodiment, the detachable coupling portion 582 may have a shape of a groove.

As such, when the detachable coupling portion 582 having a groove shape is provided on the outer circumferential surface of the porous cap 580, a protrusion (not shown) in which the detachable coupling portion 582 is inserted may be formed on a corresponding side of the excitation force reducing module 540.

Also, the reverse case may be sufficiently available. In other words, while a protrusion is formed on the outer circumferential surface of the porous cap 580, a groove is formed in the excitation force reducing module 540 so that the porous cap 580 may be easily inserted therein.

In addition, in disregard of the above conditions, the porous cap 580 may be coupled to the excitation force reducing module 540 in a screw method.

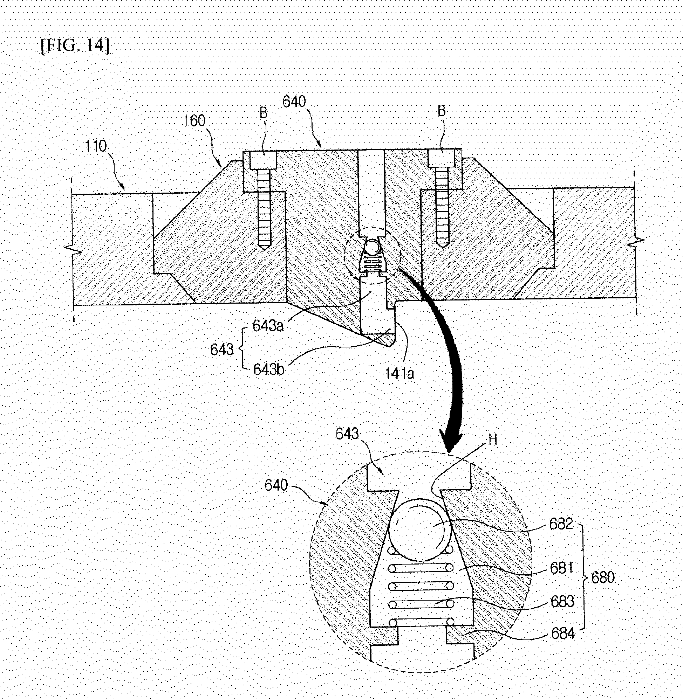

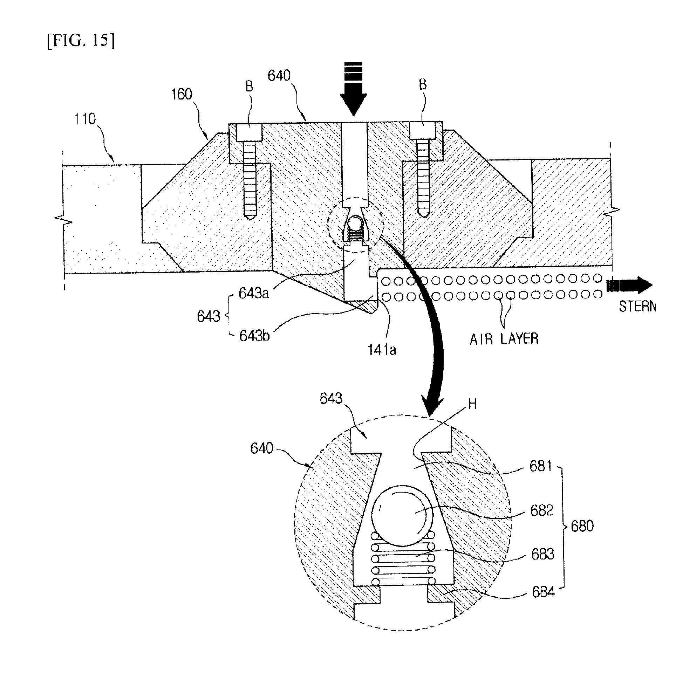

FIGS. 14 and 15 are views illustrating an operation of a line opening/shutting module 680 applied to an excitation force reducing module 640 of an excitation force reducing type ship according to another embodiment of the present invention.

Referring to FIGS. 14 and 15, the excitation force reducing module 640 of an excitation force reducing type ship according to the present embodiment may further include the line opening/shutting module 680.

The line opening/shutting module 680 is provided on a compressed air flow line 643 of the excitation force reducing module 640 and selectively opens/shuts an opening of the compressed air flow line 643.

When a supply of compressed air through the compressed air flow line 643 of the excitation force reducing module 640 is discontinued, foreign materials such as floating particles or barnacles may intrude into the hull 110 through the compressed air flow line 643.

To prevent the intrusion of the foreign materials, the opening of the compressed air flow line 643 of the excitation force reducing module 640 is appropriately opened/shut. To this end, the line opening/shutting module 680 may be provided.

The line opening/shutting module 680 is a non-powered line opening/shutting module that opens the compressed air flow line 643 when the compressed air is supplied through the compressed air flow line 643 and shuts the compressed air flow line 643 when the supply of the compressed air is discontinued.

Alternatively, the open gin/shutting of the compressed air flow line 643 of the excitation force reducing module 640 may be controlled by using an electronically controllable module that may be remotely controlled. However, in this case, the structure of the line opening/shutting module 680 is complicated and costs may be increased. Accordingly, as in the present embodiment, the non-powered line opening/shutting module 680 may be employed. However, the right scope of the present invention is not limited thereto.

In the present embodiment, the non-powered line opening/shutting module 680 may include a ball chamber 681, a ball member 682, a first elastic member 683, and an elastic member support portion 684.

The ball chamber 681 is an independent space that is separately provided on the compressed air flow line 643. The ball chamber 681 is provided on the compressed air flow line 643 and forms a space where the ball member 682 is accommodated. The space includes a portion having a width that is relatively smaller than that of a downstream portion in a direction in which the compressed air flows.

In detail, the ball chamber 681 may have a structure in which the width of the ball chamber 681 decreases and then gradually increases (in a direction in which the compressed air flows) along the compressed air flow line 643 to have the same width as that of the compressed air flow line 643. However, the right scope of the present invention is not limited thereto.

The ball member 682 is arranged in the ball chamber 681 to open/shut a communication hole H for communication between the compressed air flow line 643 and the ball chamber 681.

The first elastic member 683 is arranged between the ball member 682 and the elastic member support portion 683. The first elastic member 683 may be a helical torsion compression spring that is compressed to allow the ball member 682 to open the compressed air flow line 643 when the compressed air is supplied, and expands to allow the ball member 682 to shut the compressed air flow line 643 when the supply of the compressed air is discontinued.

The elastic member support portion 684 is formed protruding inwardly in a radial direction from an inner wall surface of the compressed air flow line 643, thereby restricting the first elastic member 683 from escaping from the ball chamber 681.

The excitation force reducing module 640 having the configuration described above will be briefly described below.

When the compressor 172 is operated and compressed air is supplied through the compressed air supply line 173, the compressed air flows along the compressed air supply line 173 and is ejected under water through the air bubble ejection hole 141 a.

As such, when the compressed air is supplied, the opening of the compressed air supply line 173 is opened by the non-powered line opening/shutting module 680. In other words, when the compressor 172 is operated and the compressed air is supplied through the compressed air supply line 173, the ball member 682 is pushed by a force of the compressed air being supplied and thus the first elastic member 683 is compressed. Then, since the communication hole H for communication between the compressed air flow line 643 and the ball chamber 681 is opened as long as a distance that the ball member 682 is moved, the compressed air is supplied through the space and ejected under water through the air bubble ejection hole 141a.

As such, as the compressed air is strongly ejected under water, the ejected compressed air forms air bubbles forming an air layer on the surface of the hull 110. Accordingly, the generation of vibration in the hull 110 as an excitation force is increased due to pressure fluctuation occurring during the operation of the propeller 120 may be prevented.

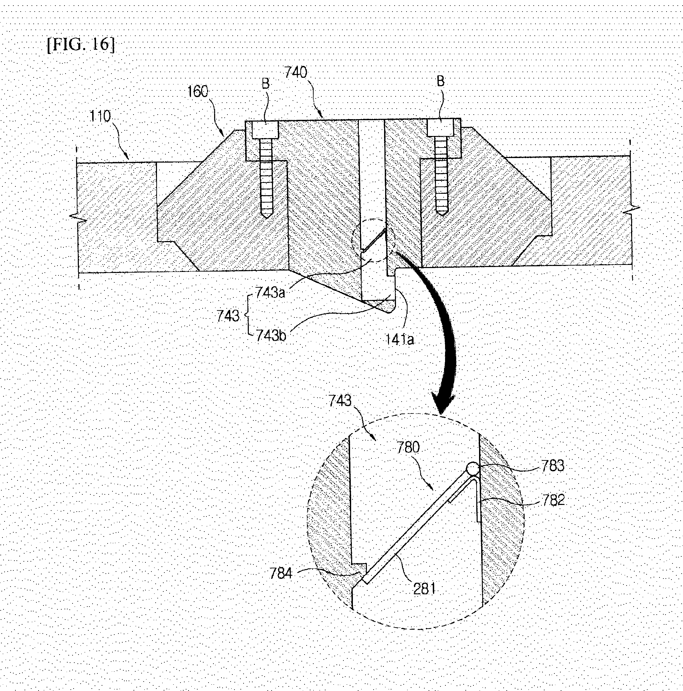

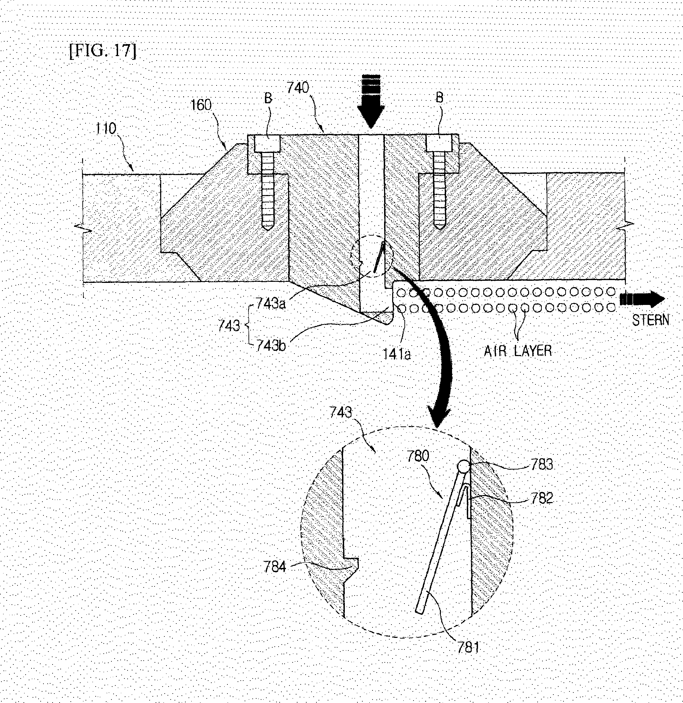

FIGS. 16 and 17 are views illustrating an operation of a non-powered line opening/shutting module 780 applied to an excitation force reducing module 740 of an excitation force reducing type ship according to another embodiment of the present invention.

Referring to FIGS. 16 and 17, the non-powered line opening/shutting module 780 of the excitation force reducing module 740 that is provided in the excitation force reducing type ship according to the present embodiment includes a line opening/shutting plate 781 that is rotatably arranged in a compressed air flow line 743 and selectively opens/shuts the compressed air flow line 743 and a second elastic member 782 that is coupled to the line opening/shutting plate 781 and is elastically biased in a direction in which the line opening/shutting plate 781 returns to the original position.

Although FIGS. 16 and 17 illustrate that the line opening/shutting plate 781 seems to be a rod type structure, the line opening/shutting plate 781 is a disc type structure that is similar to the sectional shape of the compressed air flow line 743.

A hinge 783 is coupled to one end portion of the line opening/shutting plate 781 forming a rotational axis center of the line opening/shutting plate 781. The second elastic member 782, for example, a leaf spring or a helical torsion compression spring, is provided in an area around the hinge 783 so that the line opening/shutting plate 781 that is rotated as illustrated in FIG. 17 is returned to the original position in FIG. 16.

A stopper 784 for restricting pivoting of the line opening/shutting plate 781 is provided on a wall surface of the compressed air flow line 743 so that the line opening/shutting plate 781 may be returned to the original position by an elastic force of the second elastic member 782.

The non-powered line opening/shutting module 780 having the configuration described above will be briefly described below.

When the compressed air is supplied, the opening of the compressed air supply line 173 is opened by the non-powered line opening/shutting module 780. In other words, when the compressed air is supplied through the compressed air supply line 173, the line opening/shutting plate 781 is rotated downwardly around the rotational axis center of the hinge 783 by a force of the compressed air being supplied, thereby opening the compressed air supply line 173. Accordingly, as the compressed air is supplied through the space, air bubbles may be ejected under water through the air bubble ejection hole 141a.

However, when the supply of the compressed air is discontinued, the force that pushes and rotates the line opening/shutting plate 781 is removed and thus the second elastic member 782 that has been compressed expands back. Accordingly, the line opening/shutting plate 781 is returned to the original position so as to shut the compressed air flow line 743 as illustrated in FIG. 16. Thus, the foreign materials such as floating particles or barnacles may be effectively prevented from intruding into the hull 110 through the compressed air flow line 743.

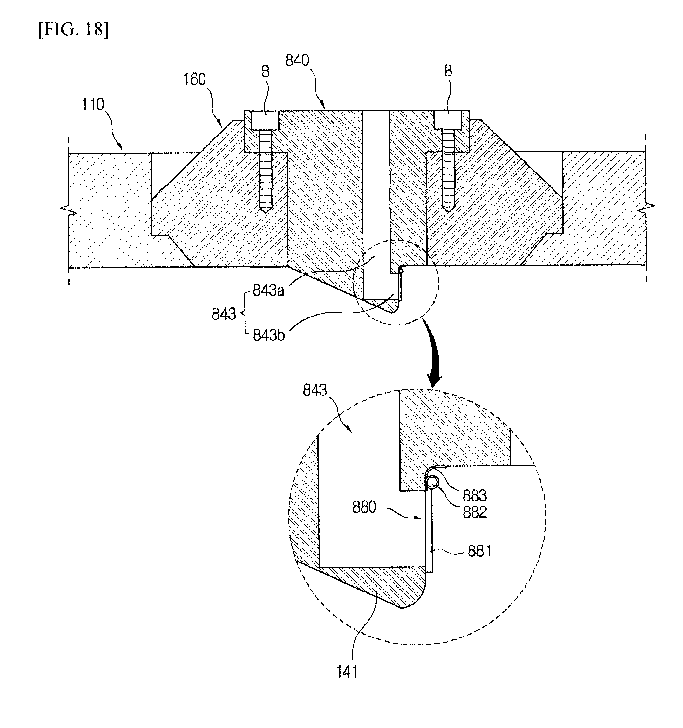

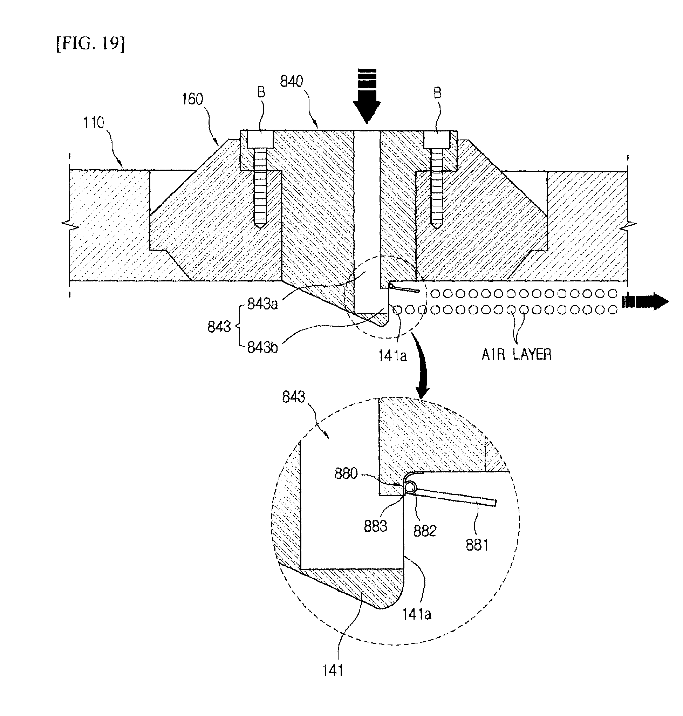

FIGS. 18 and 19 are views illustrating an operation of a non-powered line opening/shutting module 880 applied to an excitation force reducing module 840 of an excitation force reducing type ship according to another embodiment of the present invention.

Referring to FIGS. 18 and 19, the non-powered line opening/shutting module 880 of the excitation force reducing module 840 provided in an excitation force reducing type ship according to the present embodiment is almost similar to the non-powered line opening/shutting module 880 of FIGS. 16 and 17

Except that, in the non-powered line opening/shutting module 880 of the present embodiment, the air bubble ejection hole 141 a is open/shut according to the supply of compressed air at the outside of the air bubble ejection hole 141a that is formed at the end portion of the protruding portion 141.

In other words, the non-powered line opening/shutting module 880 of the present embodiment includes a line opening/shutting plate 881 that opens/shuts the air bubble ejection hole 141a, a hinge 882 that forms a rotational axis center of the line opening/shutting plate 881, and an elastic member 883 that is coupled to the line opening/shutting plate 881 and provides an elastic force to return the line opening/shutting plate 881 to the original position. Unlike the above embodiment of FIGS. 16 and 17, when the diameter of the line opening/shutting plate 881 is larger than that of the air bubble ejection hole 141a, the stopper 284 of FIGS. 16 and 17 is not necessary.

The non-powered line opening/shutting module 880 having the configuration described above will be briefly described below.

When the compressed air is supplied, the opening of the compressed air supply line 173 is opened by the non-powered line opening/shutting module 880 as illustrated in FIG. 19. In other words, when the compressed air is supplied through the compressed air supply line 173, the line opening/shutting plate 881 is rotated by a force of the compressed air around the rotational axis center of the hinge 882 so that the air bubble ejection hole 141a is opened and air bubbles may be ejected under water.

However, when the supply of the compressed air is discontinued, the force that pushes and rotates the line opening/shutting plate 881 is removed and thus the elastic member 883 that has been compressed expands back. Accordingly, the line opening/shutting plate 881 is returned to the original position so as to shut the air bubble ejection hole 141a as illustrated in FIG. 18. Thus, the foreign materials such as floating particles or barnacles may be effectively prevented from intruding into the hull 110 through the air bubble ejection hole 141a.

It should be understood that the exemplary embodiments described herein should be considered in a descriptive sense only and not for purposes of limitation. Descriptions of features or aspects within each embodiment should typically be considered as available for other similar features or aspects in other embodiments. While one or more embodiments of the present invention have been described with reference to the figures, it will be understood by those of ordinary skill in the art that various changes in form and details may be made therein without departing from the spirit and scope of the present invention as defined by the following claims.

### INDUSTRIAL APPLICABILITY

The present invention may be applied to a ship

## Claims

1. An excitation force reducing type ship comprising:
a hull having a propeller provided at the stern;
an excitation force reducing module for reducing an excitation force toward the hull by forming an air layer that generates reflected waves, on a surface of the hull neighboring the propeller during an operation of the propeller,
wherein the excitation force reducing module is arranged to be deviated to one side with respect to a center line that passes through a rotational axis of the propeller in a vertical direction of the hull.

2. The excitation force reducing type ship of claim 1, wherein the air layer that is formed by the excitation force reducing module is formed in a partial area of the surface of the hull neighboring the propeller.

3. The excitation force reducing type ship of claim 1, wherein the excitation force reducing module is arranged to be deviated to one side in a direction in which the propeller rotates, with respect to the center line.

4. The excitation force reducing type ship of claim 1, wherein the excitation force reducing module forms an air layer on the surface of the hull by ejecting air in a direction from the stem to the stern of the hull.

5. The excitation force reducing type ship of claim 1, wherein the excitation force reducing module comprises a protruding portion that is coupled to a wall surface of the hull and protrudes from an outer surface of the hull, and the excitation force reducing module forms an air layer on the surface of the hull by generating air bubbles on the outer surface of the hull through an air bubble ejection hole that is formed in the protruding portion.

6. The excitation force reducing type ship of claim 5, further comprising a porous cap that is coupled to an area of the air bubble ejection hole.

7. The excitation force reducing type ship of claim 1, further comprising a bottom plug that is coupled to a wall surface of the hull and to which the excitation force reducing module is detachably coupled; and
a compressed air supply portion for supplying compressed air to the excitation force reducing module.

8. The excitation force reducing type ship of claim 7, wherein the compressed air supply portion comprises:
a compressor provided at one side of the hull;
a compressed air supply line for directly connecting the compressor and the excitation force reducing module; and
at least one valve provided on the compressed air supply line and regulating a flow of compressed air flowing along the compressed air supply line.

9. The excitation force reducing type ship of claim 7, wherein the excitation force reducing module comprises:
a module body comprising a compressed air flow line that is formed in the module body, through which compressed air supplied by the compressed air supply portion flows, the module body being coupled to a penetration portion of the bottom plug by being inserted therein and comprising the protruding portion formed at one side of the module body; and
a body flange formed at the other side of the module body and arranged on a support seat of the bottom plug.

10. The excitation force reducing type ship of claim 9, wherein the protruding portion comprises:
an inclined wall portion connected to one side of the module body to be inclined; and a vertical wall portion arranged perpendicularly from an end portion of the inclined wall portion toward a surface of the module body.

11. The excitation force reducing type ship of claim 9, wherein the compressed air flow line comprises:
a linear section portion extending along a lengthwise direction of the module body; and
a cross section portion arranged inside the protruding portion to cross the linear section portion and comprising the air bubble ejection hole that is formed at an end portion of the cross section portion.

12. The excitation force reducing type ship of claim 11, wherein an arc type guide portion for guiding the compressed air is further provided between the linear section portion and the cross section portion.

13. The excitation force reducing type ship of claim 11, wherein the linear section portion and the cross section portion are provided independently in multiple numbers.

14. The excitation force reducing type ship of claim 1, further comprising:
a pressure fluctuation detection unit provided on the hull and detect pressure fluctuation occurring during an operation of the propeller; and
a controller for controlling generation of air bubbles through the excitation force reducing module based on information output from the pressure fluctuation detection unit.

15. The excitation force reducing type ship of claim 9, further comprising a line opening/shutting module that is provided on the compressed air flow line of the excitation force reducing module and selectively opens/shuts an opening of the compressed air flow line.

16. The excitation force reducing type ship of claim 15, wherein the line opening/shutting module is a non-powered line opening/shutting module that opens the compressed air flow line when the compressed air is supplied through the compressed air flow line and shuts the compressed air flow line when the supply of the compressed air is discontinued.

17. The excitation force reducing type ship of claim 16, wherein the non-powered line opening/shutting module comprises:
a ball member arranged in the compressed air flow line and opening/shutting the compressed air flow line; and
a first elastic member coupled to the ball member and compressed to allow the ball member to open the compressed air flow line when the compressed air is supplied and expands to allow the ball member to shut the compressed air flow line when the supply of the compressed air is discontinued.

18. The excitation force reducing type ship of claim 17, wherein the non-powered line opening/shutting module further comprises:
a ball chamber provided on the compressed air flow line and forming a space where the ball member is accommodated, the space comprising a portion having a width that is relatively smaller than that of a downstream portion in a direction in which the compressed air flows; and
an elastic member support portion provided in the ball chamber and supporting the first elastic member.

19. The excitation force reducing type ship of claim 16, wherein the non-powered line opening/shutting module comprises:
a line opening/shutting plate rotatably arranged in the compressed air flow line and selectively opening/shutting the compressed air flow line;
a second elastic member coupled to the line opening/shutting plate and elastically biased in a direction in which the line opening/shutting plate is returned to the original position; and
a stopper provided on a wall body of the compressed air flow line and restricting pivoting of the line opening/shutting plate.
